# EUROPEAN PATENT APPLICATION

(11) **EP 4 611 218 A1**
(43) Date of publication of application: **03.09.2025**
(21) Application number: 25160563.0
(22) Date of filing: 27.02.2025
(51) Int. Cl.: H02K 1/18, H02K 5/15, H02K 5/24

(54) **ELECTRIC MOTOR, IN PARTICULAR FOR AUTOMATIC DOORS, AND RELATED ASSEMBLY METHOD**

(30) Priority: 27.02.2024 IT 202400004210
(71) Applicant: Face S.r.l., 31030 Casier (Treviso) (IT)
(72) Inventor: Menuzzo, Angelo, 31030 Casier, Treviso (IT)
(74) Representative: Feltrinelli, Secondo Andrea

(57) **Abstract**

The present invention relates to an electric motor, in particular for automatic doors, for example an automatic pedestrian door, and to a method of assembling the same.

Furthermore, the present invention also relates to an automatic door, for example an automatic pedestrian door, comprising such an electric motor.

## Description

### TECHINCAL FIELD OF THE INVENTION

The present invention relates to an electric motor, in particular for automatic doors, for example an automatic pedestrian door, and to a method of assembling the same.

Furthermore, the present invention also relates to an automatic door, for example an automatic pedestrian door, comprising such an electric motor.

### STATE OF THE PRIOR ART

Since their inception, electric motors have been a key technical area for industry in general and, as such, this area is still in continuous development.

The constant technological advancement in the electric motor sector is closely related to the need to minimize costs and standardize the components used. This evolution is driven not only by growing environmental concerns and the demand for energy efficiency, but also by the pressing need to make these technologies more accessible and affordable.

In the context of automatic doors, for example, the standardization of key components such as the casing, the rotor shaft or the stator core, allows for a reduction in production costs. Furthermore, standardization facilitates maintenance and replacement of parts, simplifying the process and further reducing operating costs.

Therefore, in this sector, cost minimization and standardization of components are essential improvements to increase production efficiency.

Electric motors of a known type in the automatic door sector comprise a containment casing CC, a stator S typically fixed by interference on the containment casing CC, a rotor R mounted inside the stator S and two caps or shells C fixed to the containment casing CC so as to close it.

The containment casing CC, in addition to being a component that is not very standardizable, is very expensive because, in order to obtain the tight coupling tolerances necessary for the assembly of an electric motor, accurate machining of the same is essential, which together with the related final quality controls, increases the overall price of the electric motor.

At the same time, it is necessary to provide a solution that, while minimizing costs, is able to compensate at least in part for the machining errors of some standardized components of the electric motor.

Documents FR3083388A1, EP0715394A1 and US2001024071A1 describe respective solutions according to the state of the prior art.

It is therefore necessary and advantageous to design and make an electric motor that overcomes the disadvantages of the known technique listed above.

### OBJECTS OF THE INVENTION

The technical aim of the present invention is therefore to improve the state of the art in the field of electric motors, in particular for automatic doors, for example pedestrian doors.

The first object of the present invention is to provide an electric motor that is structurally simple.

A second object of the present invention is to provide an electric motor that is economical and that eliminates the presence of the containment casing for the stator core.

A third object of the present invention is to develop an electric motor that allows to compensate at least in part the errors in the machining of the stator core.

A fourth object of the present invention is to provide an efficient and high-performance electric motor.

A fifth object of the present invention is to provide a simple and fast assembly method.

A sixth object of the present invention is to provide an assembly method that allows to compensate at least in part the errors in the machining of the stator core.

This task and these objects are achieved by an electric motor according to claim 1.

This task and these objects are also achieved by a method for assembling an electric motor according to claim 10 and by an automatic door according to claim 9.

The dependent claims refer to preferred and advantageous embodiments of the invention.

### BRIEF DESCRIPTION OF THE DRAWINGS

Other features and advantages of the invention will be more clearly seen from the description of an embodiment of an electric motor illustrated for illustrative purposes in the attached drawings in which:
- figure 1 is a sectional view of an electric motor of a known type according to the state of the prior art,
- figure 2 is a perspective view of the electric motor according to an embodiment of the present invention,
- figure 3 is a sectional view along the plane A-A of figure 2,
- figure 4 shows an enlarged detail of the sectional view of figure 3,

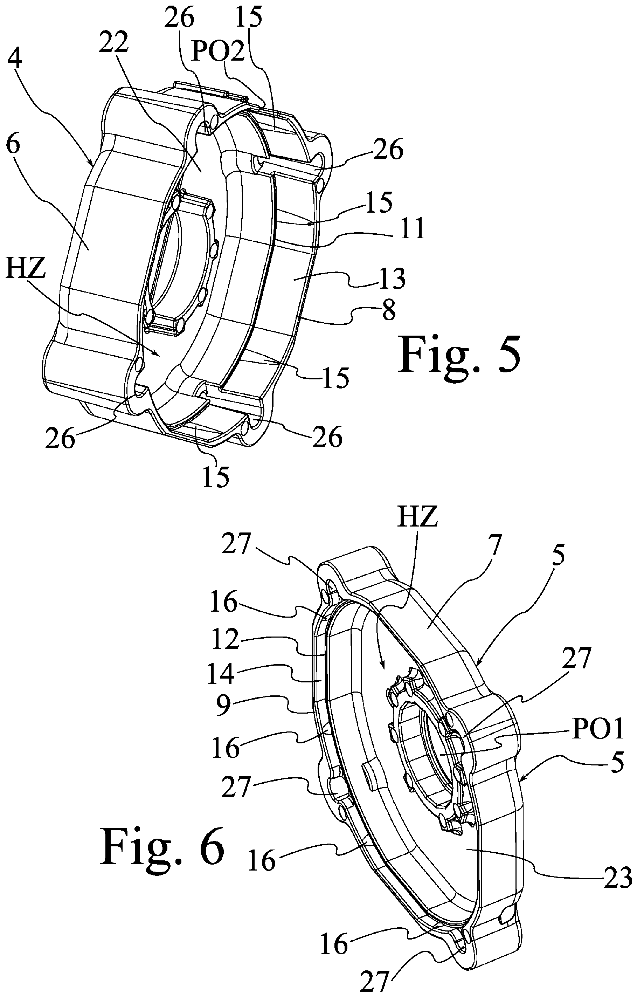

- figure 5 is a perspective view of the first cap or shell according to the embodiment of figure 2,
- figure 6 is a perspective view of the second cap or shell according to the embodiment of figure 2,
- figure 7 is an exploded view of the electric motor according to the embodiment of figure 2,
- figure 8 is a sectional view of the first and second cap or shell abutted according to the embodiment of figure 2,
- figure 9 is a perspective view of the stator core according to the embodiment example of figure 2, and
- figure 10 shows a detail of the sectional view of figure 8 with some geometric references added.

In the attached drawings, identical parts or components are identified by the same reference numbers or letters.

### EMBODIMENTS OF THE INVENTION

With reference to the attached figures, the reference number 1 indicates overall an electric motor according to a non-limiting embodiment of the present invention.

The electric motor 1 is particularly but not limitingly suitable for use in automatic doors, for example automatic pedestrian doors.

By "automatic pedestrian door" it is intended an automatic door located, for example, near or in a construction or building, i.e., for entry and/or exit into and/or from an area or zone of a construction or building, parking lot or park and which is therefore suitable to be crossed or walked through by a person.

The electric motor 1 according to the present invention comprises a stator 2 which includes a stator core 2a and a plurality of stator windings 2. In particular, the stator core 2a has a certain thickness or height T.

The electric motor 1 also comprises a rotor 3 which includes a shaft 3a rotatably mounted around a rotation axis X inside the stator 2, a rotor core 3b fixed to and integral in rotation with the shaft 3a and a plurality of rotor windings 3 or permanent magnets 3c.

The electric motor 1 then comprises a first cap or shell 4 and a second cap or shell 5 including respective perimeter walls 6, 7 which define corresponding free ends or head portions 8, 9 which are connected to each other so as to define a casing 10 which delimits a housing zone HZ for the stator 2 and for the rotor 3.

As can be understood, since the free ends or head portions 8, 9 of the respective perimeter walls 6, 7 of the caps or shells 4, 5 are connected to each other, there is no component between the two, i.e., the electric motor 1 does not include any containment casing of the stator core 2a.

In particular, the perimeter wall 6 of the first cap or shell 4 and the perimeter wall 7 of the second cap or shell 5 define respective internal shoulders 11, 12 which delimit a positioning zone PZ for the stator core 2a where the distance D between the respective internal shoulders 11, 12 is greater than or equal to the thickness or height T of the stator core 2a.

The first cap or shell 4 defines a first internal surface 13 between its internal shoulder 11 and its free end or head portion 8 and the second cap or shell 5 defines a second internal surface 14 between its internal shoulder 12 and its free end or head portion 9.

More specifically, at least a first protrusion 15 is delimited or included on the first internal surface 13 and at least a second protrusion 16 is delimited or included on the second internal surface 14.

With reference to this, the at least one first protrusion 15 and the at least one second protrusion 16 act as compensation elements for the clearance or slack between the stator core 2a and the respective internal shoulders 11, 12 so that the stator core 2a is stabilized in the positioning zone PZ following assembly of the electric motor 1.

By the term "stabilized" it is meant that the stator core 2a does not move or shift, during use of the electric motor 1, at least along the rotation axis X of the shaft 3a of the rotor 3, i.e., it does not move or shift axially with respect to the shaft 3a of the rotor 3.

Preferably, the electric motor 1 does not include a compensation ring for the stator core 2a.

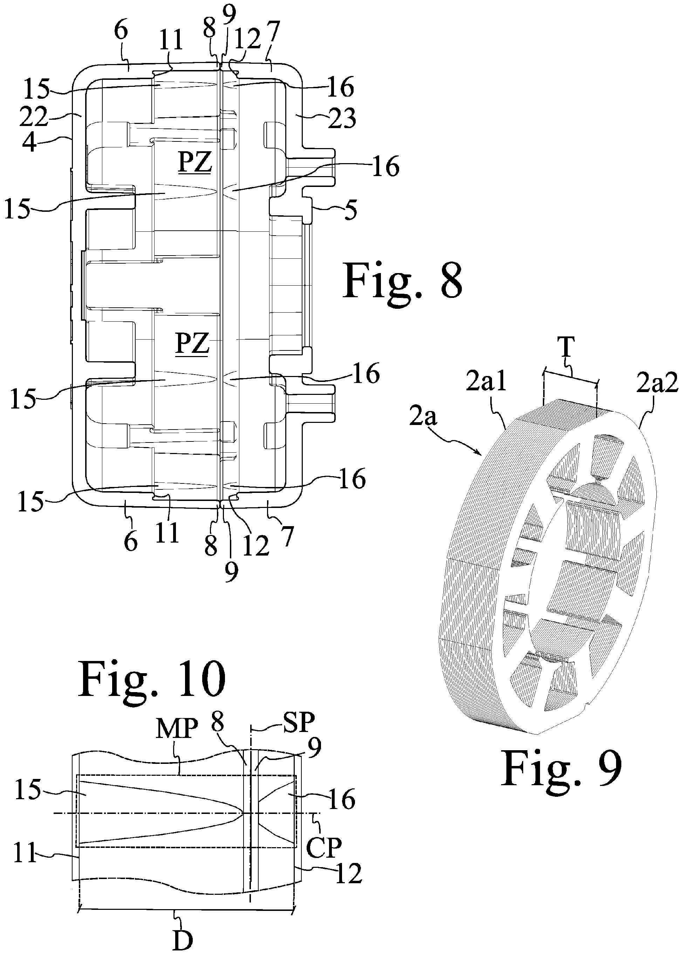

According to the non-limiting embodiment illustrated in figure 9, the stator core 2a comprises or is made of a pack of stacked ferromagnetic laminations.

Again according to the non-limiting embodiment illustrated in figure 9, the stator core 2a has a substantially circular or elliptical perimeter plan configuration.

In other non-limiting embodiments, the stator core 2a could also have other types of perimeter plan configurations, for example rectangular, square and/or similar.

Optionally, the stacked laminations of the stator core 2a can be made of silicon iron and can have a thickness, for example, between 0.2 mm and 0.8 mm, preferably about 0.5 mm.

From a construction point of view, these laminations can be obtained by cold cutting and then stacked on top of each other to form a pack of laminations of a certain height or thickness, depending on the needs.

In general, these packs of laminations are sufficiently precise in diameter or width, but not in height or thickness since in each pack all the differences in thickness or height of each individual lamination are algebraically added, compared to the reference measurement, generated by the inevitable machining errors.

The number of laminations stacked in the pack can vary from a few dozen, for example from 20 or 80 laminations, up to several hundreds, for example from 100 to 2000, and the difference in thickness of the stator core 2a can even reach a few millimetres, for example up to 1, 2, 4, 6 mm or more.

To compensate for such manufacturing errors, the present invention uses the at least one first protrusion 15 and the at least one second protrusion 16 which, acting as compensation elements for the clearance or slack between the stator core 2a and the respective internal shoulders 11, 12, stabilize the stator core 2a in the positioning zone PZ following the assembly of the electric motor 1.

This allows to improve the operation and overall performance of the electric motor 1.

By way of non-limiting example, the clearance or slack between the stator core 2a and the respective internal shoulders 11, 12 can be between a few tenths of a millimeter up to a few millimetres, for example it can be between about 0.2 mm and 2 mm, this depending on how large the machining error of the stator core 2a is.

Clearly, if the thickness or height T of the stator core 2a were equal to the distance D between the internal shoulders 11, 12, for example in the case of a high machining error of the stator core 2a, the latter or, in particular, the external perimeter edges 2a1, 2a2 thereof, would each abut against a respective internal shoulder 11, 12, penetrating entirely into the at least one first protrusion 15 and into the at least one second protrusion 16 and there would be no clearance or slack between the stator core 2a and the internal shoulders 11, 12. In this case, the stator core 2a would be stabilized in the positioning zone PZ directly by the internal shoulders 11, 12 thanks to the penetration into the at least one first protrusion 15 and into the at least one second protrusion 16.

As already mentioned, the stator 2 comprises a plurality of windings (not illustrated in the figures) which, optionally, can be protected or covered by one or more protective or covering foils or components 20 included in the electric motor 1.

Similarly, the core of the stator 2a can also be protected or covered by one or more protective covers or hoods 21 included in the electric motor 1, for example made as two half-caps or half-shells designed to be brought close together and possibly abutted so as to wrap or enclose the core of the stator 2a and, if present, the one or more protective or covering foils or components 20 of the plurality of windings of the stator 2. In this case, clearly, at least one of the two half-caps or half-shells will have a designated opening to allow the passage of the shaft 3a of the rotor 3.

If desired, the rotor core 3b may also comprise or be constituted by a pack of stacked ferromagnetic material laminations.

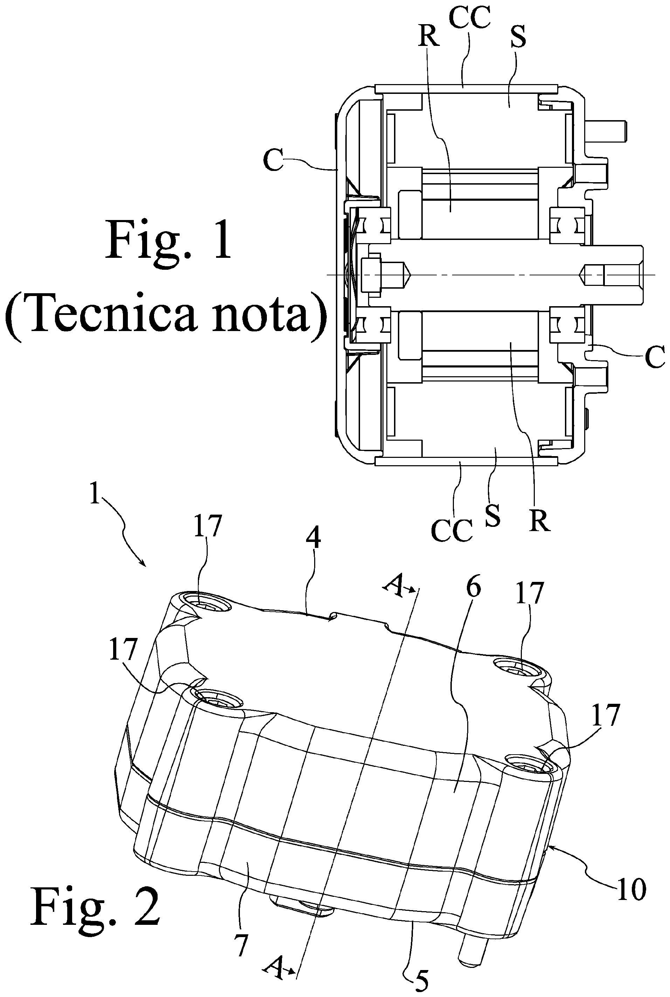

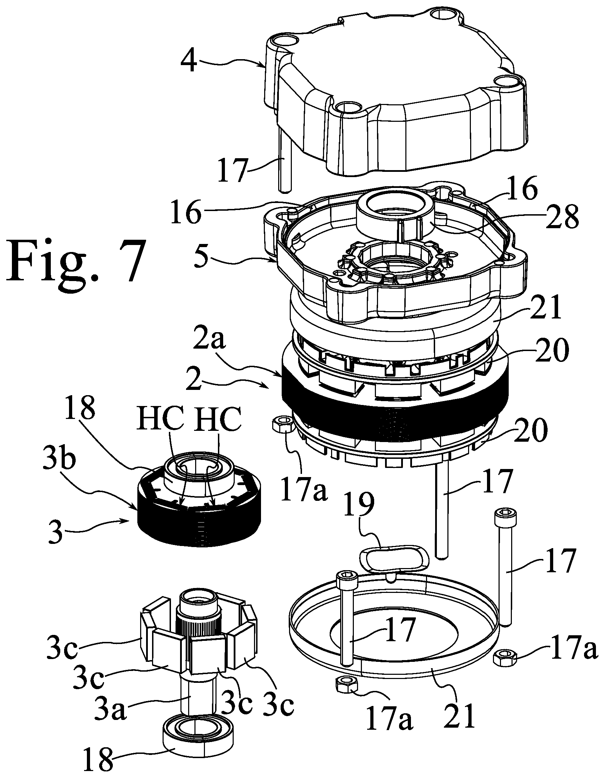

According to the non-limiting embodiment of the present invention illustrated in figures 2 and 7, the rotor 3 comprises a plurality of permanent magnets 3c housed in respective housing compartments HC obtained in the rotor core 3b.

In this regard, in fact, the electric motor 1 is preferably a brushless electric motor.

Furthermore, the shaft 3a of the rotor 3 may be supported in rotation by at least a bearing 18, for example two bearings 18, included in the electric motor 1.

If desired, the electric motor 1 may also comprise at least one support 28 for the at least one bearing 18, if present.

Optionally, the electric motor 1 may also comprise a compensation ring 19 for the axial movements along the rotation axis X of the shaft 3a of the rotor 3.

With reference to the first cap or shell 4 and the second cap or shell 5, the same may be made as corresponding half-shells which, once coupled, define the casing 10 delimiting the housing zone HZ for the stator 2 and for the rotor 3.

According to the non-limiting embodiment of the present invention illustrated in figure 2, the first cap or shell 4 has a perimeter wall 7 that is longer or higher than the perimeter wall 7 of the second cap or shell 5.

According to other non-limiting embodiments of the present invention, the first cap or shell 4 and the second cap or shell 5 could have respective perimeter walls 6, 7 having the same length or height.

From a structural point of view, the first cap or shell 4 and the second cap or shell 5 advantageously present a respective main wall 22, 23 from whose perimeter or edge the corresponding perimeter wall 6, 7 arises or departs, for example with an development direction inclined or orthogonal to the main lying plane of the main wall 22, 23.

According to other non-limiting embodiments of the present invention, the first cap or shell 4 and/or the second cap or shell 5 could be configured as a spherical cap and, in this case, the perimeter walls 6, 7 would be constituted by the respective perimeter portions of the spherical cap 4, 5.

Preferably, the second cap 5 and/or the first cap 4 delimits/delimit a first passage opening PO1 for the rotor shaft 3a.

If desired, the first cap 4 and/or the second cap 5 also delimit/delimit a second passage opening PO2 for the wiring of the electrical and/or electronic components optionally included in the electric motor 1.

For example, the electrical and/or electronic components of the electric motor 1 may comprise at least one electronic board including at least one encoder, operatively associated with the shaft 3a, for example at its end that does not emerge from the casing 10 while the wiring of such electrical and/or electronic components may comprise, for example, one or more connection cables and at least one connection terminal.

From a functional point of view, when assembling the electric motor 1 by closing the caps or shells 4, 5 or, more specifically, by abutting the respective free ends or head portions 8, 9, preferably each external perimeter edge 2a1, 2a2 belonging to the stator core 2a penetrates or, in any case, pushes, thanks to the clamping force of the caps or shells 4, 5, into at least one respective first and second protrusion 15, 16 which can then act as a compensation element for the clearance or slack present between the stator core 2a and the respective internal shoulders 11, 12, in fact, stabilizing it in the positioning zone PZ.

With reference to this aspect, the clearance or slack present between the stator core 2a and the respective internal shoulders 11, 12 is due to the fact that the distance D between the internal shoulders 11, 12 of the perimeter walls 6, 7 of the caps or shells 4, 5 is preferably greater than the thickness or height T of the stator core 2a, since it is necessary to have a distance D that takes into account the possible machining error of the stator core 2a, otherwise it would not be possible to position the latter in the positioning zone PZ, unless the two caps or shells 4, 5 are deformed during assembly of the electric motor 1, by means of a tightening force of the same, such as to equally abut the free ends or head portions 8, 9.

It should be noted that, if the stator core 2a is not adequately stabilized, by means of the at least one first protrusion 15 and by means of the at least one second protrusion 16, in the positioning zone PZ, the latter could, during use of the electric motor 1, move at least axially along the rotation axis X of the shaft resulting in a reduction in the efficiency and overall performance of the same.

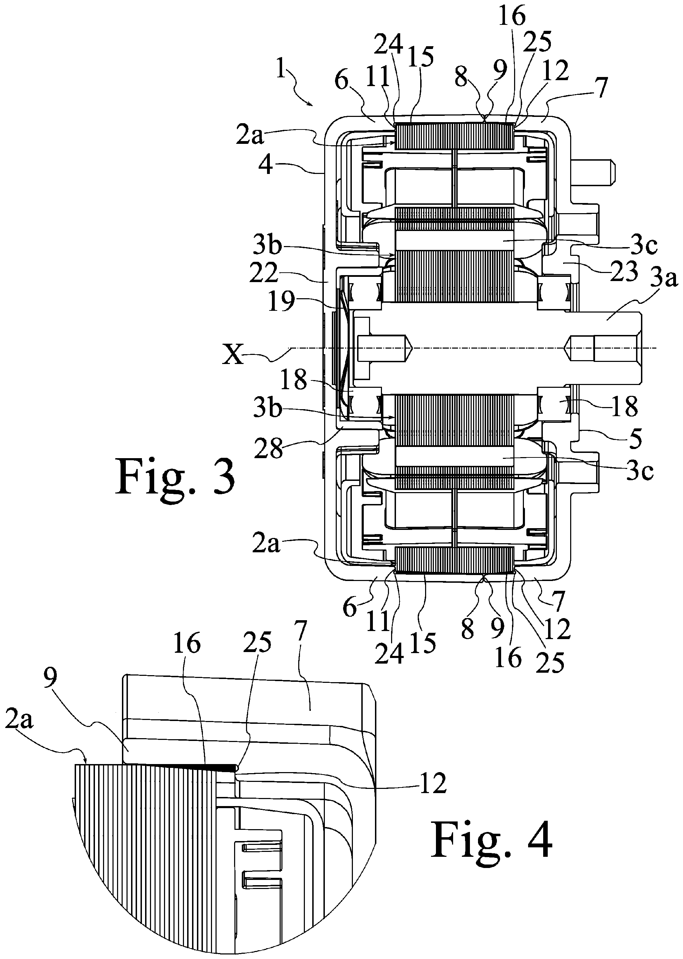

As regards the at least one first protrusion 15 and the at least one second protrusion 16, they preferably have a thickness that progressively increases in the direction starting from the corresponding free ends or head portions 8, 9 towards the respective internal shoulders 11, 12 (see, for example, figure 4). It should be noted that, in this description, the term "direction" means an oriented direction.

In this way, the more a given outer perimeter edge 2a1, 2a2 of the stator core 2a sinks into a given protrusion 15, 16, advancing in the direction from the respective free end or head portion 8, 9 towards the respective internal shoulder 11, 12, the more resistance it will encounter, since there is a greater quantity of material constituting the protrusion 15, 16 which provides an increase in the constraining reaction. This causes the advancement of the stator core 2a in the positioning zone PZ to increase at the other outer perimeter edge 2a2, 2a1 in the direction from the other free end or head portion 9, 8 towards the other internal shoulder 12, 11, since such outer perimeter edge 2a2, 2a1 is advancing at a point where there is less material constituting the protrusion 16, 15 which provides less constraining reaction. This causes a kind of self-regulation of the advancement of the stator core 2a into the positioning zone PZ.

Preferably, the at least one first protrusion 15 and the at least one second protrusion 16 have a width, i.e., a dimension orthogonal to the direction from an internal shoulder 11, 12 and the respective free end 8, 9 or, in any case, a section along their respective main lying plane MP, which progressively increases in the direction starting from the corresponding free ends or head portions 8, 9 towards the respective internal shoulders 11, 12 (see, for example, figure 10).

This aspect is also closely related to the effect just described regarding the advancement of the stator core 2a in the positioning zone PZ, since a section progressively increasing in the direction starting from the corresponding free ends or head portions 8, 9 towards the respective internal shoulders 11, 12 generates greater resistance due to the greater quantity of material constituting the protrusions 15, 16 encountered when advancing from a certain external perimeter edge 2a1, 2a2.

With reference to the geometric configuration of the section of the at least one first protrusion 15 and of the at least one second protrusion 16, the latter can advantageously be a parabolic conical section, truncated if desired. In this regard, the presence or absence of the truncation of the parabolic conical section can occur as a function of the length of the first internal surface 13 and/or of the second internal surface 14.

In particular, according to the non-limiting embodiment of the present invention shown in figure 2, the at least one first protrusion 15 has a complete parabolic conical section while the at least one second protrusion 16 has a truncated parabolic conical section, since the second internal surface 14 is shorter than the first internal surface 13.

If desired, the at least one first protrusion 15 and the at least one second protrusion 16 can extend respectively on the first internal surface 13 and on the second internal surface 14 for all or part of the distance D between the respective internal shoulders 11, 12 and the corresponding free ends or head portions 8, 9.

Advantageously, the first cap or shell 4 and the second cap or shell 5 can define, at the respective internal shoulders 11, 12, for example in a position proximal to the external surface of the first cap or shell 4 and of the second cap or shell 5 with respect to the position of the respective internal shoulders 12, 13, corresponding enlargements 24, 25 configured to allow, if necessary, the reception of part of the material of the at least one first protrusion 15 and of the at least one second protrusion 16 which is pushed and/or crushed by the external perimeter edges 2a1, 2a2 of the stator core 2a during the assembly of the electric motor 1.

With reference to such an aspect, in the case in which the stator core 2a is stabilized in the positioning zone PZ with the external perimeter edges 2a1, 2a2 very close to the respective internal shoulders 11, 12, for example in the case in which the machining errors of the stator core 2a are considerable, the enlargements 24, 25 advantageously allow the material of the at least one first protrusion 15 and of the at least one second protrusion 16 to be accommodated, pushed or crushed by the advancement of the stator core 2a so that the at least one first protrusion 15 and the at least one second protrusion 16 can still act as compensation elements for the clearance or slack without excessively slowing down or impeding the stabilization of the stator core 2a.

Optionally, the at least one first protrusion 15 and the at least one second protrusion 16 are aligned or facing each other with respect to the separation plane SP between the first cap or shell 4 and the second cap or shell 5 passing through their respective free ends or head portions 8, 9 or are positioned aligned or facing each other so as to present a common or coincident vertical center plane CP (see, for example, figure 10).

Preferably, the at least one first protrusion 15 and the at least one second protrusion 16 are made of plastically deformable material, optionally plastic material or metal material, for example aluminium.

It should be noted that, since the at least one first protrusion 15 and the at least one second protrusion 16 are preferably made of plastically deformable material, the deformation is of the non-reversible type. For example, the material used to make the at least one first protrusion 15 and the at least one second protrusion 16 has a modulus of elasticity (Young's modulus) greater than 1 GPa, if desired greater than 2 GPa or 10 GPa, preferably greater than 50 GPa, for example 69 GPa.

Advantageously, the at least one first protrusion 15 and the at least one second protrusion 16 are obtained by molding in a single piece each with the respective cap or shell 4, 5, for example by die casting.

Preferably, the at least one first protrusion 15 delimited or included on the first internal surface 13 comprises a first plurality of protrusions 15, for example two, four, six, eight or more, delimited or included on the first internal surface 13 and the at least one second protrusion 16 delimited or included on the second internal surface 14 comprises a second plurality of protrusions 16, for example two, four, six, eight or more, delimited or included on the second internal surface 14.

In this case, the first and second plurality of protrusions 15, 16 allow the stator core 2a to be stabilized not only axially, but also radially, i.e., along radial directions with respect to the center of the electric motor 1 or with respect to the center of the rotor core 3b. In essence, the first and second plurality of protrusions 15, 16 act as bearings or shock absorbers or spacers that prevent the stator core 2a from moving radially relative to the center of the electric motor 1 or relative to the center of the rotor core 3b.

Advantageously, the first and second plurality of protrusions 15, 16 are homogeneously distributed on the first internal surface 13 and on the second internal surface 14 respectively. This contributes even more to improving the radial and/or axial stabilization of the stator core 2a in the positioning zone PZ.

Preferably, the first and second plurality of protrusions 15, 16 are aligned or facing each other two by two with respect to the separation plane SP between the first cap or shell 4 and the second cap or shell 5 passing through their respective free ends or head portions 8, 9 and/or are positioned aligned or facing each other two by two so that each pair of protrusions 15, 16 presents a common or coincident vertical center plane CP (see, for example, figure 8).

According to the non-limiting embodiment of the present invention illustrated in figure 2, the first cap or shell 4 defines four protrusions 15 and the second cap or shell 5 defines another four protrusions 16 which are aligned or facing two by two with the four protrusions 15 of the first cap or shell 4 with respect to the separation plane SP between the first cap or shell 4 and the second cap or shell 5 passing through their respective free ends or head portions 8, 9 and the four protrusions 16 of the second cap or shell 5 are positioned aligned or facing two by two with the four protrusions 15 of the first cap or shell 4 so that each pair of protrusions 15, 16 presents a common or coinciding vertical center plane CP.

It should be noted that, clearly, the preferred and/or optional features described with reference to the at least one first protrusion 15 and to the at least one second protrusion 16 may equally be present even in the case in which a first plurality of protrusions 15 were foreseen on the first cap or shell 4 and a second plurality of protrusions 16 on the second cap or shell 5.

Preferably, the electric motor 1 comprises a plurality of closing elements 17 configured, during assembly of the electric motor 1, to tighten and bring into abutment the respective free ends or head portions 8, 9 of the caps or shells 4, 5 so that the tightening force thus imparted presses the stator core 2a against the at least one first protrusion 15 and against the at least one second protrusion 16 or against the first and second plurality of protrusions 15, 16 and/or vice versa.

Optionally, the closing elements 17 are or include screws, rivets, bolts or similar, possibly associated with corresponding nuts 17a.

Advantageously, the closing elements 17 are inserted along respective tunnels or grooves that delimit a first portion of tunnel or groove 26 obtained on the first cap or shell 4, for example on its perimeter wall 6, and the other or second portion of tunnel or groove 27 obtained on the second cap or shell 5, for example on its perimeter wall 7, so that when the two caps or shells 4, 5 are facing or aligned, also the respective portions of tunnel or groove 26, 27 are facing or aligned to allow that, once the closing elements 17 are inserted into them, the latter can constrain the two caps 4, 5.

Subject-matter of the present invention is also an automatic door, for example, an automatic pedestrian door.

The automatic door according to the present invention defines a passage opening and comprises a frame, at least one leaf connected in a sliding or rotatable manner to the frame and at least one electric motor according to the present invention or according to non-limiting embodiments of the present invention configured to operate the at least one leaf.

Subject-matter of the present invention is also a method for assembling an electric motor 1.

The method according to the present invention initially comprises the step of providing a stator 2 which includes a stator core 2a and a plurality of stator windings 2, the stator core 2a having a certain thickness or height T.

It is therefore comprised the step of providing a rotor 3 which includes a shaft 3a rotatably mountable around a rotation axis X inside the stator 2, a rotor core 3b fixed to and integral in rotation with the shaft 3a and a plurality of rotor windings 3 or permanent magnets 3c.

The method then comprises the step of providing a first cap or shell 4 and a second cap or shell 5 comprising respective perimeter walls 6, 7 that define corresponding free ends or head portions 8, 9, wherein the perimeter wall 6 of the first cap or shell 4 and the perimeter wall 7 of the second cap or shell 5 define respective internal shoulders 11, 12 that delimit, in an assembled configuration of the electric motor 1, a positioning zone PZ for the stator core 2a where the distance D between the respective internal shoulders 11, 12 is greater than or equal to the thickness or height T of the stator core 2a.

In particular, the first cap or shell 4 defines a first internal surface 13 between its internal shoulder 11 and its free end or head portion 8 and the second cap or shell 5 defines a second internal surface 14 between its internal shoulder 12 and its free end or head portion 9.

Furthermore, at least a first protrusion 15 is delimited or included on the first internal surface 13 and at least a second protrusion 16 is delimited or included on the second internal surface 14.

Advantageously, the step of providing a first cap or shell 4 and a second cap or shell 5 is achieved by molding in a single piece the at least one first protrusion 15 and the at least one second protrusion 16 each with the respective cap or shell 4, 5, for example by die casting.

The step of mounting the rotor 3 or the shaft 3a of the rotor 3 inside the stator 2 is then envisaged.

If desired, the step of providing a rotor 3 could be carried out with the shaft 3a of the rotor 3 already mounted inside the stator 2.

The method according to the present invention then provides, before or after the assembly step, the step of positioning the stator 2 or the core of the stator 2a in at least part of the positioning zone PZ delimited by the first internal surface 13 or in any case interposing the stator 2 or the core of the stator 2a between the two caps or shells 4, 5.

The step of positioning the second cap or shell 5 facing or aligned with the first cap or shell 4 is then included so as to define a casing 10 that delimits a housing zone HZ for the stator 2 and for the rotor 3.

Finally, the method according to the present invention comprises the step of tightening, if desired by means of special closing elements 17, for example screws, rivets, bolts or similar, possibly associated with corresponding nuts, the two caps or shells 4, 5 bringing their respective free ends or head portions 8, 9 into abutment so that the tightening force thus exerted presses the stator core 2a against the at least one first protrusion 15 and against the at least one second protrusion 16 and/or vice versa allowing the latter to act as compensation elements for the clearance or slack between the stator core 2a and the respective internal shoulders 11, 12 to stabilize the stator core 2a in the positioning zone PZ.

It should be noted that, of course, all the components of the electric motor 1 included in the assembly method just described, if desired, can include some or all of the optional and/or preferred structural and/or functional features described above with reference to the electric motor 1.

The electric motor 1 according to the present invention is structurally simple and economical since it eliminates the presence of the containment casing for the stator core 2a typically present in electric motors according to the state of the prior art thanks to the lengthening of the respective perimeter walls 6, 7 of the caps or shells 4, 5.

Furthermore, the electric motor 1 according to the present invention allows to compensate at least in part the machining errors of the stator core 2a.

This allows to obtain an efficient and high-performance electric motor 1.

Similarly, the assembly method of an electric motor 1 according to the present invention is simple and fast and allows to compensate at least in part the machining errors of the stator core 2a.

It has thus been seen how the invention fully achieves the proposed objects.

Modifications and variations of the invention are possible within the scope of protection defined by the claims.

## Claims

1. Electric motor (1) including:
- a stator (2) including a stator core (2a) and a plurality of stator windings (2), the stator core (2a) having a certain thickness or height (T),
- a rotor (3) which includes a shaft (3a) rotatably mounted inside the stator (2) around a rotation axis (X), a rotor core (3b) fixed to and integral in rotation with the shaft (3a) and a plurality of rotor windings (3) or permanent magnets (3c),
- a first cap or shell (4) and a second cap or shell (5) comprising respective perimeter walls (6, 7) which define corresponding free ends or head portions (8, 9) abutting each other so as to define a casing (10) which delimits a housing zone (HZ) for the stator (2) and the rotor (3),
wherein the perimeter wall (6) of the first cap or shell (4) and the perimeter wall (7) of the second cap or shell (5) define respective internal shoulders (11, 12) which delimit a positioning zone (PZ) for the stator core (2a) where the distance (D) between the respective internal shoulders (11, 12) is greater than or equal to the thickness or height (T) of the stator core (2a),
wherein the first cap or shell (4) defines a first internal surface (13) between its internal shoulder (11) and its free end or head portion (8) and the second cap or shell (5) defines a second internal surface (14) between its internal shoulder (12) and its free end or head portion (9),
wherein at least one first protrusion (15) is delimited or included on the first internal surface (13) and at least one second protrusion (16) is delimited or included on the second internal surface (14), said at least one first protrusion (15) and said at least one second protrusion (16) acting as compensation elements for the clearance or slack between the stator core (2a) and the respective internal shoulders (11, 12) so that the stator core (2a) is stabilized in the positioning zone (PZ) following the assembly of the electric motor (1).
wherein said at least one first protrusion (15) and said at least one second protrusion (16) are made of plastically deformable material,
and wherein said at least one first protrusion (15) and said at least one second protrusion (16) have a thickness that progressively increases in the oriented direction starting from the corresponding free ends or head portions (8, 9) towards the respective internal shoulders (11, 12).

2. Electric motor according to any of the preceding claims, wherein said at least one first protrusion (15) and said at least one second protrusion (16) have a width, i.e., a dimension orthogonal to the direction from an internal shoulder (11, 12) and the respective free end (8, 9), which is progressively increasing in the direction starting from the corresponding free ends or head portions (8, 9) towards the respective internal shoulders (11, 12).

3. Electric motor according to any one of the preceding claims, wherein said at least one first protrusion (15) and said at least one second protrusion (16) are aligned or facing each other with respect to the separation plane (SP) between the first cap or shell (4) and the second cap or shell (5) passing through their respective free ends or head portions (8, 9) or are positioned aligned or facing each other so as to present a common or coincident vertical center plane (CP).

4. Electric motor according to any one of the preceding claims, wherein said at least one first protrusion (15) and said at least one second protrusion (16) are obtained by molding in a single piece, each with the respective cap or shell (4, 5).

5. Electric motor according to any one of the preceding claims, wherein the at least one first protrusion (15) delimited or included on the first internal surface (13) comprises a first plurality of protrusions (15) delimited or included on the first internal surface (13) and the at least one second protrusion (16) delimited or included on the second internal surface (14) comprises a second plurality of protrusions (16) delimited or included on the second internal surface (14).

6. Electric motor according to the preceding claim, wherein said first and second plurality of protrusion (15, 16) are homogeneously distributed respectively on the first internal surface (13) and on the second internal surface (14).

7. Electric motor according to claim 5 or 6, wherein said first and second plurality of protrusion (15, 16) are aligned or facing each other two by two with respect to the separation plane (SP) between the first cap or shell (4) and the second cap or shell (5) passing through their respective free ends or head portions (8, 9) and/or are positioned aligned or facing each other two by two so that each pair of protrusions (15, 16) presents a common or coincident vertical center plane (CP).

8. Electric motor according to any of the preceding claims, wherein the stator core (2a) comprises or is made of a pack of stacked ferromagnetic material laminations.

9. Electric motor according to any one of the preceding claims, comprising a plurality of closing elements (17) configured, during the assembly of the electric motor (1), to tighten and bring into abutment the respective free ends or head portions (8, 9) of the caps or shells (4, 5) so that the tightening force thus exerted presses the stator core (2a) against at least one first protrusion (15) and against at least one second protrusion (16) or against the first and second plurality of protrusions (15, 16) and/or vice versa.

10. Automatic door that defines a passage opening and includes a frame, at least one leaf connected in a sliding or rotatable manner to said frame and at least one electric motor according to any one of the preceding claims configured to operate said at least one leaf.

11. Method for assembling an electric motor (1) including the steps of:
- providing a stator (2) including a stator core (2a) and a plurality of stator windings (2), the stator core (2a) having a certain thickness or height (T),
- providing a rotor (3) which includes a shaft (3a) rotatably mountable inside the stator (2) around a rotation axis (X), a rotor core (3b) fixed to and integral in rotation with the shaft (3a) and a plurality of rotor windings (3) or permanent magnets (3c),
- providing a first cap or shell (4) and a second cap or shell (5) comprising respective perimeter walls (6, 7) which define corresponding free ends or head portions (8, 9), wherein the perimeter wall (6) of the first cap or shell (4) and the perimeter wall (7) of the second cap or shell (5) define respective internal shoulders (11, 12) which delimit, in an assembled configuration of the electric motor (1), a positioning zone (PZ) for the stator core (2a) where the distance (D) between the respective internal shoulders (11, 12) is greater than or equal to the thickness or height (T) of the stator core (2a), wherein the first cap or shell (4) defines a first internal surface (13) between its internal shoulder (11) and its free end or head portion (8) and the second cap or shell (5) defines a second internal surface (14) between its internal shoulder (12) and its free end or head portion (9) and wherein at least one first protrusion (15) is delimited or included on the first internal surface (13) and at least one second protrusion (16) is delimited or included on the second internal surface (14),
wherein said at least one first protrusion (15) and said at least one second protrusion (16) are made of plastically deformable material,
and wherein said at least one first protrusion (15) and said at least one second protrusion (16) have a thickness that progressively increases in the oriented direction starting from the corresponding free ends or head portions (8, 9) towards the respective internal shoulders (11, 12),
- mounting the rotor (3) or the shaft (3a) of the rotor (3) inside the stator (2),
- before or after the mounting step, positioning the stator (2) or the stator core (2a) in at least part of the positioning zone (PZ) delimited by the first internal surface (13) or in any case interpose the stator (2) or the stator core (2a) between the two caps or shells (4, 5),
- positioning the second cap or shell (5) facing or aligned with the first cap or shell (4) so as to define a casing (10) which delimits a housing zone (HZ) for the stator (2) and for the rotor (3),
- tightening the two caps or shells (4, 5) bringing their respective free ends or head portions (8, 9) into abutment so that the tightening force thus exerted presses the stator core (2a) against at least one first protrusion (15) and against at least one second protrusion (16) and/or vice versa allowing the latter to act as compensation elements for the clearance or slack between the stator core (2a) and the respective internal shoulders (11, 12) to stabilize the stator core (2a) in the positioning zone (PZ).
